# EUROPÄISCHE PATENTSCHRIFT

(11) **EP 0 976 634 B1**
(45) Veröffentlichungstag und Bekanntmachung des Hinweises auf die Patenterteilung: **01.10.2003**
(21) Anmeldenummer: 99112504.8
(22) Anmeldetag: 01.07.1999
(51) Int. Cl.: B60T 13/74

(54) **Feststellbremse für Kraftwagen und Verfahren zur Bedienung**
Parking brake for an automotive vehicle and method for controlling
Frein de stationnement pour véhicule automobile et son procédé de commande

(30) Priorität: 29.07.1998 DE 19834129
(43) Veröffentlichungstag der Anmeldung: 02.02.2000
(73) Patentinhaber: DaimlerChrysler AG, 70567 Stuttgart (DE)
(72) Erfinder: Muharrem, Er, 70376 Stuttgart (DE); Röss, Karl-Heinz, 73061 Ebersbach (DE)

(56) Entgegenhaltungen:
- WO-A-98/09853
- DE-A- 4 129 919
- DE-A- 4 129 934
- DE-A- 19 625 104
- NL-C- 1 006 357

## Beschreibung

Die Erfindung betrifft zunächst eine Feststellbremse für Kraftwagen, insbesondere Personenkraftwagen, nach dem Oberbegriff des Patentanspruches 1.

Eine derartige Feststellbremse für Kraftwagen geht beispielsweise aus der DE 41 29 919 A1 sowie aus der DE 41 29 934 A1 hervor. Diese Feststellbremsen werden im Regelfall von einer motorisch betriebenen Stelleinheit fremdkraftbetätigt. Die Betätigung erfolgt über einen Elektromotor und ein diesem nachgeschaltetes Untersetzungsgetriebe, die eine Betätigungs- oder Bremskraft über ein Verteilergetriebe und zwei Seilzüge auf zwei achsweise angeordnete Radbremsen übertragen.

Die Anordnung eines zentralen Aktuators mit einem Elektromotor und einem Untersetzungsgetriebe zur gleichzeitigen Betätigung von zwei Radbremsen erfordert eine Vielzahl von Bauelementen. Darüber hinaus ist eine derartige Betätigung störanfällig, da insbesondere durch die beiden verhältnismäßig langen Seilzüge und das Verteilergetriebe eine unsymmetrische Bremswirkung auf die beiden achsweise angeordneten Räder auftreten kann.

Aus der DE 41 29 919 A1 geht ferner eine Feststellbremsanlage für Kraftwagen hervor, bei der jeweils an zwei Rädern ein Betätigungselektromotor zur Betätigung der Radbremse angeordnet ist. Der Betätigungselektromotor ist im wesentlichen achsparallel zur Radachse angeordnet. Die Kraftübertragung findet durch ein Gestänge oder dergleichen statt.

Aufgabe der Erfindung ist es, eine Feststellbremse der gattungsgemäßen Art derart weiterzubilden, daß eine technisch einfach zu realisierende Notfunktion der Feststellbremse gegeben ist.

Diese Aufgabe wird bei einer Feststellbremse der eingangs beschriebenen Art erfindungsgemäß dadurch gelöst, daß eine zweite redundante Energieversorgung der Feststellbremse umfassend eine zweite Batterie (60) vorgesehen ist.

Beim Ausfall der eigentlichen ersten Energieversorgung oder der Fahrzeugbatterie wird dann selbsttätig auf die zweite redundante Energieversorgung und die zweite Batterie umgeschaltet. Dabei kann vorteilhafterweise eine Vorrangschaltung vorgesehen sein, die der Feststellbremse eine höhere Priorität der Energieversorgung als anderen Verbrauchern im Fahrzeug einräumt.

Darüber hinaus können bei einer vorteilhaften Ausführungsform vier jeweils vier Radbremsen zugeordnete Aktuatoren vorgesehen sein. Dies ist insbesondere hinsichtlich der Redundanz bei Ausfall eines oder auch zweier Aktuatoren von großem Vorteil.

Hinsichtlich des flexiblen Übertragungsmittels kommen rein prinzipiell die unterschiedlichsten Übertragungsmittel, beispielsweise flexible Wellen oder dergleichen in Betracht. Eine besonders vorteilhafte Ausführungsform sieht vor, daß das flexible Übertragungsmittel ein Seilzug ist. Dies ist insbesondere deshalb von großem Vorteil, da an sich bekannte Feststellbremsen in praktisch allen Fällen über Seilzüge betätigt werden. Hierdurch ist eine sehr einfache Nachrüstung von Aktuatoren der erfindungsgemäßen Feststellbremse möglich, ohne daß die Radbremse und deren Betätigungselemente an sich geändert werden müssen.

Vorzugsweise umfaßt jeder Aktuator einen Elektromotor und ein selbsthemmendes Untersetzungsgetriebe. Auf diese Weise ist eine sehr große Kraftübertragung bei kleinem Bauraum möglich.

Um insbesondere eine Blockierung der Radbremsen bei Betätigen der Feststellbremse als Hilfsbremse zu vermeiden, sieht eine vorteilhafte Ausführungsform vor, daß die Betätigungskraft oder Bremsenspannkraft durch die Betätigungseinheit einstellbar und die Steuereinheit dosierbar ist. Hierdurch wird insbesondere eine ABS-Funktion bei Verwendung der Feststellbremse als Hilfsbremse auf einfache Weise realisiert.

Die Erfindung betrifft ferner ein Verfahren zur Betätigung einer Feststellbremse der oben beschriebenen Art.

Diesbezüglich liegt ihr die Aufgabe zugrunde, nicht nur eine optimale Bremswirkung der Feststellbremse bei einem Betrieb als Feststellbremse im eigentlichen Sinne, sondern insbesondere auch eine optimale Bremswirkung der Feststellbremse bei einem Betrieb als Hilfsbremse zu ermöglichen.

Diese Aufgabe wird bei einem Verfahren zur Betätigung einer Feststellbremse erfindungsgemäß dadurch gelöst, daß man die Betätigungskraft oder die Bremsenspannkraft in Abhängigkeit von der Geschwindigkeit des Kraftwagens einstellt und daß man bei Überschreiten eines vorgebbaren Geschwindigkeitsschwellenwerts eine dynamische Abbremsung mit einer variierbaren Betätigungskraft und bei Unterschreiten des vorgebbaren Geschwindigkeitsschwellenwerts eine Feststellbremsung mit maximaler Betätigungskraft vornimmt. Hierdurch wird insbesondere ausgeschlossen, daß in einer Notsituation, in der der Fahrer des Fahrzeugs die Betätigungseinrichtung der Feststellbremse maximal betätigt, ein Blockieren der Räder und ein dadurch bewirkter instabiler Fahrzustand oder Schleuderzustand des Kraftwagens auftritt.

Vielmehr wird durch die Steuereinheit entschieden, ob eine dynamische Abbremsung oder eine Feststellbremsung stattfindet, wobei man vorteilhafterweise bei der dynamischen Abbremsung die Radgeschwindigkeit der abgebremsten Räder erfaßt und die Betätigungskraft oder Bremsenspannkraft dieser Räder zur Vermeidung einer Blockierung der Räder in Abhängigkeit von den Radgeschwindigkeiten einstellt. Hierdurch läßt sich bei Verwendung der Feststellbremse als Hilfsbremse ähnlich einem ABS-System ein Blockieren der abgebremsten Räder vermeiden.

Weitere Vorteile und Merkmale der Erfindung sind Gegenstand der nachfolgenden Beschreibung sowie der zeichnerischen Darstellung eines Ausführungsbeispiels.

In der Zeichnung zeigen:
- Fig. 1: ein Ausführungsbeispiel einer erfindungsgemäßen Feststellbremse und
- Fig. 2: schematisch ein Flußdiagramm eines erfindungsgemäßen Verfahrens zum Betrieb der in Fig. 1 dargestellten Feststellbremse.

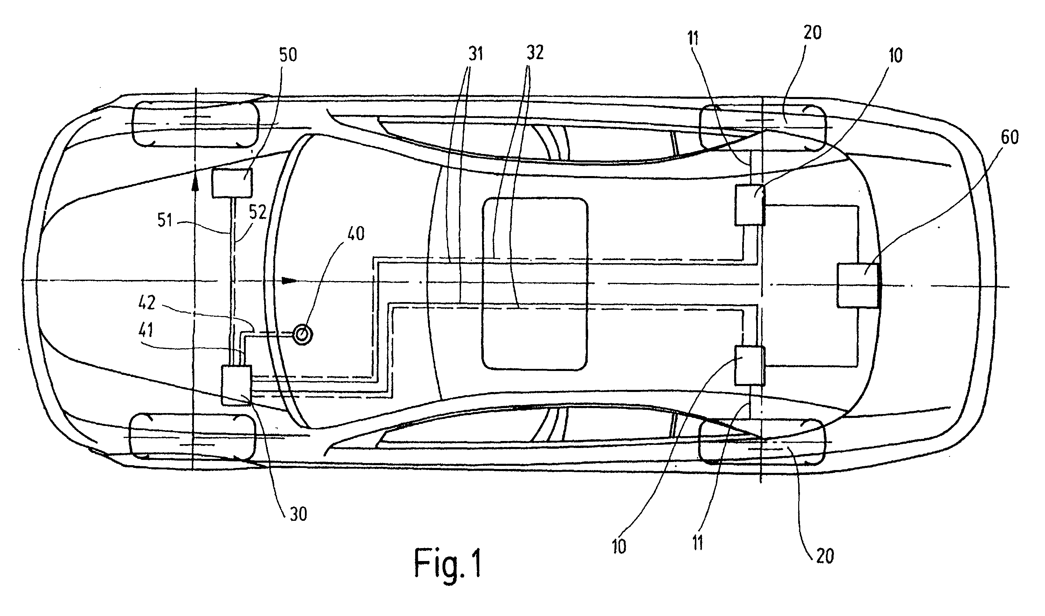

Ein Ausführungsbeispiel einer Feststellbremse, dargestellt in Fig. 1, umfaßt Aktuatoren 10, die jeweils an Fahrzeugrädern 20 angeordneten Radbremsen (nicht dargestellt) zugeordnet sind. Das Übertragungsmittel zur Übertragung einer Betätigungs- oder Bremskraft zwischen den Aktuatoren 10 und den Radbremsen in den Rädern 20 ist flexibel, beispielsweise wie in Fig. 1 dargestellt, ein Seilzug 11. Dies ermöglicht eine praktisch beliebige Anordnung der Aktuatoren 10 in bezug auf die in den Rädern 20 angeordneten Radbremsen. Insbesondere kann abweichend von der in Fig. 1 dargestellten Weise auch eine Anordnung der Aktuatoren 10 senkrecht zur Radachse oder in einem Winkel zur Radachse, abhängig von den Bauräumen bei unterschiedlichen Achssystemen, vorgesehen sein.

Die Aktuatoren 10 selbst umfassen einen Betätigungselektromotor und ein Untersetzungsgetriebe, die im einzelnen nicht dargestellt sind.

Die Aktuatoren 10 sind von einer Steuereinheit 30 über elektrische Leitungen 31, 32 ansteuerbar. Wie in Fig. 1 dargestellt, sind zwei Energieversorgungen mit zwei Batterien 51, 52 vorgesehen, wobei im Regelfall jeweils nur eine Energieversorgung mit einer Batterie 51 zur Betätigung der Aktuatoren 10 vorgesehen ist, wohingegen die zweite Energieversorgung mit der zweiten Batterie 52 bei Ausfall der ersten Energieversorgung und/oder der ersten Batterie 51 zum Einsatz kommt. Die zweite Energieversorgung mit der zweiten Batterie 52 ist daher eine redundante Energieversorgung für Notsituationen. In entsprechender Weise sind zwischen der Steuereinheit 30 und den Aktuatoren 10 redundante elektrische Leitungen 32 vorgesehen, die bei einem Ausfall der elektrischen Leitung 31 verwendbar sind.

Die Feststellbremse wird durch eine Betätigungseinrichtung 40 betätigt, die beispielsweise ein am Armaturenbrett oder an der Mittelkonsole oder an einer anderen geeigneten Position eines Kraftwagens angeordneter Schalter oder auch ein anderes Betätigungselement, beispielsweise ein Fußhebel sein kann. Wie in Fig. 1 dargestellt ist, findet die Betätigung der Feststellbremse durch die Betätigungseinrichtung 40 auf elektrischem Wege über eine Leitung 41 statt. Bei Ausfall dieser Leitung 41 ist eine redundante Leitung 42 vorgesehen.

Neben der zweiten Energieversorgung und einer Pufferbatterie 60 ist, beispielsweise in der Steuereinrichtung 30, eine Vorrangschaltung vorgesehen, die der elektrischen Feststellbremse eine Priorität der Energieversorgung vor anderen Verbrauchern des Kraftwagens einräumt.

Eine manuelle Betätigung der Feststellbremse ist aufgrund der redundanten Energieversorgung mit der redundanten Batterie 60 nicht erforderlich. Es versteht sich jedoch, daß die Aktuatoren 10 auch mit einem Hilfswerkzeug mechanisch gelöst und verriegelt werden können. Darüber hinaus ist die elektrische Beschaltung derart ausgestaltet, daß bei einem abgezogenen Zündschlüssel die Feststellbremse noch betätigt, jedoch nicht mehr gelöst werden kann. Darüber hinaus ist eine Stand-by-Schaltung für die Stromversorgung vorgesehen, welche die Stromversorgung der Feststellbremse nach einer vorgebbaren Verriegelungszeit von der Energieversorgung trennt. Ein unbeabsichtigtes Lösen der Feststellbremse ist aufgrund der selbsthemmenden Getriebe, die Bestandteil der Aktuatoren 10 sind, nicht möglich.

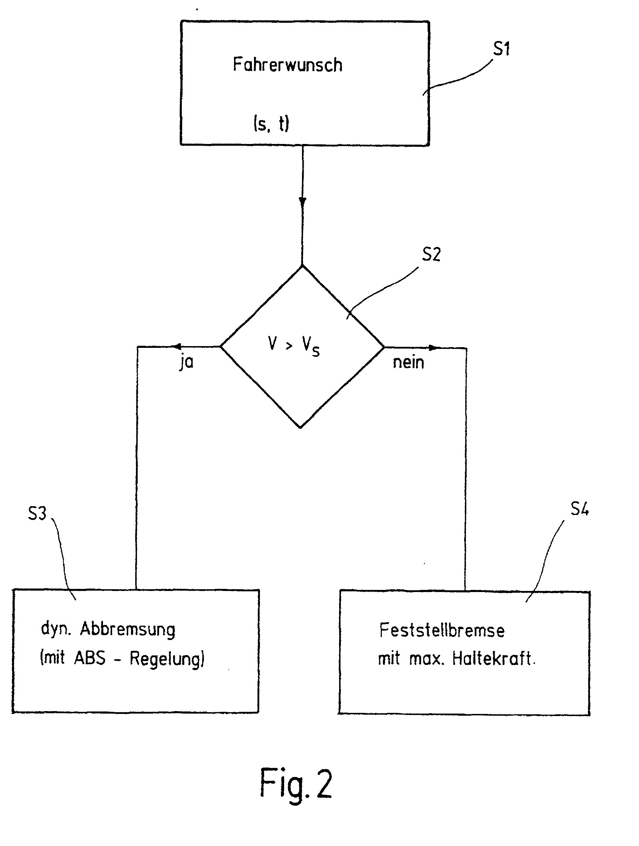

Ein Verfahren zur Betätigung einer derartigen Feststellbremse wird in Verbindung mit Fig. 2 nachfolgend erläutert.

Zunächst einmal wird in einem Schritt S1 der Wunsch des Fahrers für die Stärke des Bremsvorgangs des Kraftwagens erfaßt. Dies geschieht durch Abfragen der Betätigungseinrichtung 40 durch die Steuereinheit 30. In einem Schritt S2 wird geprüft, ob die auf an sich bekannte Weise ermittelte Fahrzeuggeschwindigkeit v größer ist als ein Geschwindigkeicsschwellenwert vs. Ist dies der Fall, findet in Schritt S3 eine dynamische Abbremsung statt, wobei die Betätigungskraft oder Bremsenspannkraft einer Radbremse in Abhängigkeit von der Raddrehzahl dieses Rades durch die Steuereinheit 30 über die Aktuatoren 10 variiert wird. Eine derartige dynamische Abbremsung ermöglicht auf diese Weise eine ABS-Regelung der durch die Feststellbremse gebremsten Räder. Ist dagegen die Fahrzeuggeschwindigkeit v nicht größer als der vorgegebene Geschwindigkeitsschwellenwert v_{S}, so wird in Schritt S4 eine Feststellbremsung mit maximaler Betätigungskraft und damit maxiamler Haltekraft vorgenommen. Aufgrund dieses Verfahrens erkennt die Steuereinheit 30 der Feststellbremse gewissermaßen selbsttätig, ob die Feststellbremse als Hilfsbremse, d.h. bei einer Störung der Betriebsbremsanlage eingesetzt wird oder als Feststellbremse zum Halten eines Fahrzeugs beispielsweise an einem Gefälle.

Die Bremsenspannkraft kann dabei auf sehr einfache Weise durch die Stromaufnahme der Aktuatoren 10 erfaßt werden. Es versteht sich, daß darüber hinaus zusätzliche Weg- oder Kraftmeßglieder an den Aktuatoren 10 oder in den Radbremsen vorgesehen sein können, welche die Bremsenspannkraft erfassen. Die Bremsenspannkraft wird der Steuereinheit 30 zugeführt.

## Patentansprüche

1. Feststellbremse für Kraftwagen, insbesondere Personenkraftwagen, umfassend wenigstens einen, wenigstens einer Radbremse zugeordneten elektrisch ansteuerbaren Aktuator (10), der von einer Steuereinheit (30) durch Betätigen einer Betätigungseinrichtung (40) elektrisch ansteuerbar ist, wobei wenigstens zwei Radbremsen jeweils ein im Bereich der Radaufhängungen angeordneter Aktuator zugeordnet und zwischen den Aktuatoren (10) und den Radbremsen (20) jeweils ein flexibles Übertragungsmittel (11) zur Übertragung der Betätigungskraft vorgesehen ist, **dadurch gekennzeichnet, daß** eine zweite redundante Energieversorgung der Feststellbremse umfassend eine zweite Batterie (60) vorgesehen ist.

2. Feststellbremse nach Anspruch 1, **dadurch gekennzeichnet, daß** vier jeweils vier Radbremsen zugeordnete Aktuatoren (10) vorgesehen sind.

3. Feststellbremse nach Anspruch 1 oder 2, **dadurch gekennzeichnet, daß** das flexible Übertragungsmittel ein Seilzug (11) ist.

4. Feststellbremse nach einem der Ansprüche 1 bis 3, **dadurch gekennzeichnet, daß** jeder Aktuator (10) einen Elektromotor und ein selbsthemmendes Untersetzungsgetriebe umfaßt.

5. Feststellbremse nach einem der Ansprüche 1 bis 4, **dadurch gekennzeichnet, daß** die Betätigungskraft oder Bremsenspannkraft durch die Steuereinheit (30) dosierbar ist.

6. Feststellbremse nach einem der Ansprüche 1 bis 5, **dadurch gekennzeichnet, daß** die Betätigungskraft oder die Bremsenspannkraft in Abhängigkeit von der Geschwindigkeit des Kraftwagens eingestellt wird.

7. Verfahren zur Betätigung einer Feststellbremse nach einem der Ansprüche 1 bis 6, **dadurch gekennzeichnet, daß** die Betätigungskraft oder die Bremsenspannkraft in Abhängigkeit von der Geschwindigkeit des Kraftwagens eingestellt wird, wobei man bei Überschreiten eines vorgebbaren Geschwindigkeitsschwellenwerts (vₛ) eine dynamische Abbremsung mit veränderbarer Betätigungskraft und bei Unterschreiten des vorgebbaren Geschwindigkeitsschwellenwerts (vₛ) eine Feststellbremsung mit maximaler Betätigungskraft vornimmt.

8. Verfahren nach Anspruch 7, **dadurch gekennzeichnet, daß** man bei dem Bremsvorgang die Drehgeschwindigkeit der abgebremsten Räder erfaßt und die Betätigungskraft oder Bremsenspannkraft dieser Räder zur Vermeidung einer Blockierung der abgebremsten Räder in Abhängigkeit von deren Drehgeschwindigkeit einstellt.

## Claims

1. Parking brake for motor cars, especially passenger cars, including at least one electrically controllable actuator (10) assigned to a wheel brake which can be electrically controlled by a control unit (30) through the activation of an activating device (40) wherein an actuator arranged in the region of the wheel suspensions is respectively assigned to at least two wheel brakes and between the actuators (10) and the wheel brakes (20) a flexible transfer medium (11) for the transfer of the activating force is provided, **characterised in that** a second redundant energy supply of the parking brake having a second battery (60) is provided.

2. Parking brake according to claim 1 **characterised in that** four respectively four actuators (10) assigned respectively to four wheel brakes are provided.

3. Parking brake according to claim 1 or 2 **characterised in that** the flexible transfer medium is a cable pull (11).

4. Parking brake according to one of the claims 1 to 3 **characterised in that** each actuator (10) has an electric motor and a reduction gear retained by friction.

5. Parking brake according to one of the claims 1 to 4 **characterised in that** the activating force or brake clamping force can be measured through the control unit (30).

6. Parking brake according to one of the claims 1 to 5 **characterised in that** the activating force or brake clamping force is adjusted depending upon the speed of the motor vehicle.

7. Method of activation of a parking brake according to one of the claims 1 to 6 **characterised in that** the activating force or the brake clamping force is adjusted depending upon the speed of the motor vehicle wherein upon a pre-specifiable speed threshold value (Vₛ) being exceeded dynamic braking with changeable activating force is undertaken and in the event of falling short of the pre-specifiable speed threshold value (Vₛ) parking braking with maximum activating force is undertaken.

8. Method according to claim 7 **characterised in that** with the braking process the rotating speed of the braked wheels is recorded and the activating force or brake clamping force of these wheels is adjusted to prevent locking of the braked wheels depending upon their rotation speed.

## Revendications

1. Frein d'arrêt pour véhicule automobile, en particulier voiture particulière, comprenant au moins un vérin (10) à commande électrique attribué à au moins un frein sur roue, ce vérin pouvant être commandé électriquement par une unité de commande (30) en actionnant un dispositif de commanda (40), moyennant quoi respectivement un vérin disposé dans la zone des suspensions de roue est attribué à au moins deux freins sur roue, et respectivement un moyen de transmission (11) flexible pour la transwiggion de la force de commande est prévu entre les vérins (10) et les freina sur roue (20), **caractérisé en ce qu'**une deuxième alimentation redondante des freins de stationnement comprenant une seconde batterie (60) est prévue.

2. Frein d'arrêt selon la revendication 1, **caractérise en ce que** quatre vérins (10) attribués respectivement à quatre freins sur roue sont prévus.

3. Frein d'arrêt selon la revendication 1 ou 2, **caractérisé en ce que** la moyen de transmission flexible est un câble (11).

4. Frein d'arrêt selon les revendications 1 à 3, **caractérisé en ce que** chaque vérin (10) comprend un moteur électrique et un démultiplicateur irréversible.

5. Frein d'arrêt selon les revendications 1 à 4, **caractérisé en ce que** la force de commande ou la pression de freinage peut être ajustée par l'unité de commande (30).

6. Frein d'arrêt selon les revendications 1 à 5, **caractérisé en ce que** la force de commande ou la pression de freinage est réglée en fonction de la vitesse du véhicule.

7. Procédé de commande d'un frein d'arrêt selon l'une des revendications 1 à 6, **caractérisé en ce que** la force de commande ou la pression de freinage est réglée en fonction de la vitesse du véhicule, moyennant quoi, en cas de dépassement d'une valeur seuil de vitesse (Vs) pouvant être prédéfinie, un taux de freinage dynamique avec force de commande modifiable est appliqué, et en cas de niveau infériaur à la valeur de seuil vitesse (Vs) pouvant être prédéfinie, un freinage de stationnement avec force de commande maximale est appliqué.

8. Procédé selon la revendication 7, **caractérisé en ce que** lors du procédé de freinage, la vitesse de rotation des roues freinées est mesurée, et la force de commande ou la pression de freinage de ces roues est réglée pour éviter un blocage des roues freinées en fonction de leur vitesse de rotation.
